Europäisches Patentamt

European Patent Office

Office européen des brevets

(11) Publication number: **0 382 275**
A1

# EUROPEAN PATENT APPLICATION

(21) Application number: 90200162.7

(51) Int. Cl.⁵: **A23G 9/00**

(22) Date of filing: 23.01.90

(30) Priority: 08.02.89 GB 8902808

(43) Date of publication of application:
16.08.90 Bulletin 90/33

(84) Designated Contracting States:
AT BE CH DE DK ES FR GB GR IT LI NL SE

(71) Applicant: UNILEVER NV
Burgemeester s'Jacobplein 1 P.O. Box 760
NL-3000 DK Rotterdam(NL)
(84) BE CH DE DK ES FR GR IT LI NL SE AT

Applicant: UNILEVER PLC
Unilever House Blackfriars P.O. Box 68
London EC4P 4BQ(GB)
(84) GB

(72) Inventor: Adams, Donald James
4 Cotswold Close, Bredon
Nr. Tewksbury, Gloucester, GL20(GB)
Inventor: Baker, Terence Paul
6 Swallow Drive
Rushden, Northants, NN10 9EG(GB)
Inventor: Brown, Richard William
4 Alington Close, Finedon
Wellingborough, Northants, NN9 5DS(GB)

(74) Representative: Keppels, Willem Richard
Engelbertus Gerardus, Drs. et al
Unilever N.V. Patent Division P.O.Box 137
NL-3130 AC Vlaardingen(NL)

(54) Method and apparatus for making frozen confection material.

(57) Method and apparatus for making frozen confection material, wherein the rate of change, calculated by electronic control means (17), of the motor load, measured by sensing means (15), of a scraped surface heat exchanger is used as a criterion for electronically controlling the refrigeration in the heat exchanger.

## METHOD AND APPARATUS FOR MAKING FROZEN CONFECTION MATERIAL

### Background of the invention

The invention relates to an apparatus and to a method for making frozen confection material such as ice-cream, milk ice, mellorine, water ice, sherbet etc. on a continuous basis.

When continuously manufacturing ice confection products, a usual practice is agitating a liquid ice mix in a scraped surface heat exchanger in which a refrigerant is circulated to partly freeze the mix. Depending on the composition of the mix and geographically different tastes and eating habits, a different amount of gas may be incorporated, or not, to obtain the desired amount of overrun, e.g. water ice 0-25%, sherbet 25-80% and ice-cream 60-140%, and generally water ice 0-10%, sherbet 25-45% and ice-cream 80-110%.

For this ice confection manufacture, semi- and highly automatized apparatus has become available such as the Crepaco-W-Series freezers and the FH-180 AOC freezer ex Br drene Gram AS.

According to the specifications published in 1984 pertaining to the latter apparatus, this freezer is provided with an electronically controlled air dosage system comprising a mix pump having a variable drive, an inductive mix flow meter receiving mix from said pump, a source of pressurized air, an air mass flow meter and a motor-operated air control valve receiving input signals from the mix flow meter and the airflow meter. The magnitude of the power consumption of the main freezer motor driving the rotor inside the cylinder of the heat exchanger is sensed and this signal is the input factor for an electronic regulator both controlling the temperature of the ice confection output and preventing overload and freeze-up. Automatic starting up can be effected using the same controls by filling the cylinder with ice mix, starting the main freezer motor and the refrigeration system and starting the mix feed pump and the ice-cream delivery pump only after the power consumption of the main motor has reached a certain preset value.

In the freeze-up preventing systems known to date, the magnitude of the power consumption is monitored and if it surmounts a predetermined value the refrigeration is stopped by evacuating the refrigerant from the heat exchanger. However, in practice the conditions in the heat exchanger can sometimes still result in a jam of the rotor in the cylinder, particularly if high ice and low overrun products are being produced, presumably because the input signal is too late to prevent a solid ice layer from building up.

Consequently, there is a continuing need for an improved system to prevent freeze-up of the scraped surface heat exchanger.

### Summary of the invention

The invention satisfies this need by providing an apparatus for making frozen confection material comprising a motor driven scraped surface heat exchanger, including refrigeration means surrounding a cylinder, scraping means rotatably arranged in said cylinder driveable by a motor means, load sensing means for sensing the torque or power consumption of said motor, an electronic control means provided with a program and adapted to receive input signals from the said sensing means and to give control signals controlling a valve for evacuating a refrigerant from the refrigeration means, the program having a comparing step for comparing the rate of change of torque or power consumption measured to a pre-set value and triggering a control signal for said valve if the rate of change exceeds the pre-set value.

In a preferred embodiment of the above apparatus the heat exchanger thereof is provided with an electronically controlled air dosage system, known per se, comprising a mix pump having a variable drive, an inductive flow meter receiving mix from said pump, a source of pressurized air, an air mass flow meter and a motor-operated air control valve receiving input signals from the mix flow meter and the air flow meter, in which air dosage system the electronic control means is controlling the air control valve, the mix pump and the refrigerant evacuating valve.

The invention also relates to a method for making frozen confection material by agitating a liquid ice mix in a scraped surface heat exchanger in which a refrigerant is circulated, monitoring the torque or power consumption for agitating said mix, comparing the rate of change of said torque or power consumption with a pre-set value and evacuating the refrigerant from the heat exchanger if said rate of change exceeds that pre-set value.

### Brief description of the drawings

The invention will be exemplified in the following description, reference being had to the appertaining drawing.

In the drawing

Fig. 1 is a schematic representation of a freezing apparatus according to the invention,

Fig. 2 is a diagram showing characteristic changes in motor load with time.

## Detailed description

The apparatus and method according to the invention are developed for making frozen confection products either with or without overrun, such as ice-cream, water ice, milk ice, sherbet, mellorine etc.

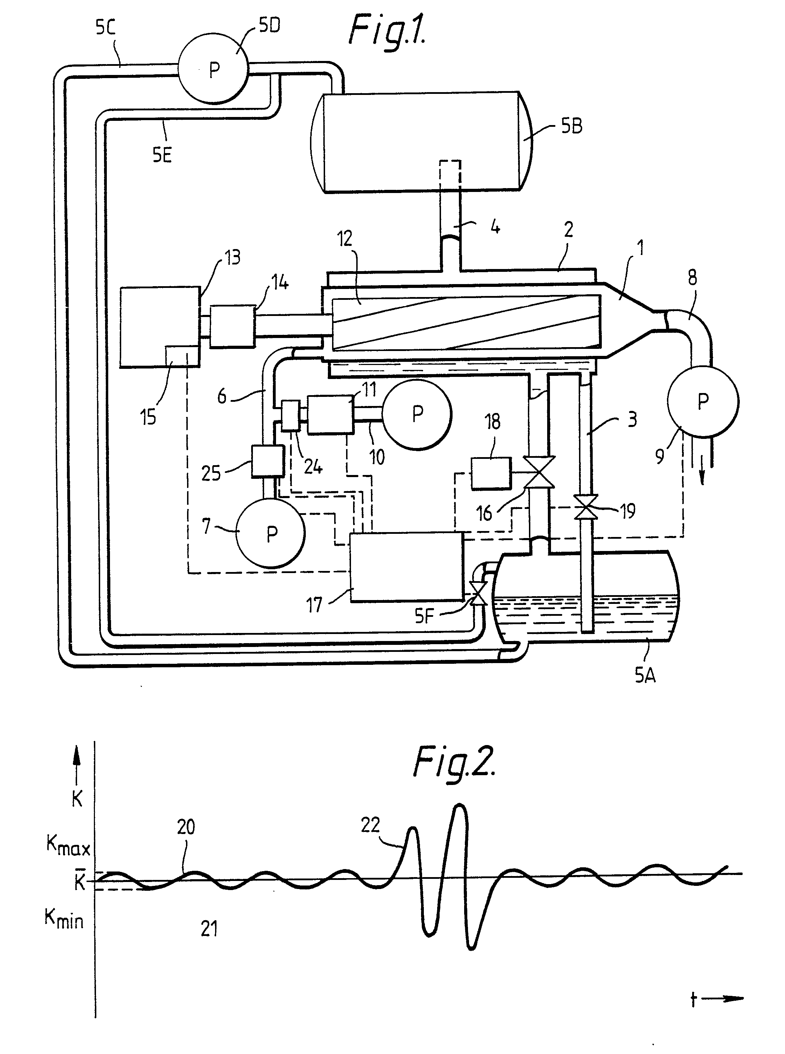

The apparatus as schematically represented in Fig. 1 includes a usual scraped surface heat exchanger or continuous freezer 1, which has a refrigeration means or jacket 2 for refrigerating fluid and a refrigerating fluid supply line 3 leading from a refrigerant evacuation vessel 5A and a riser pipe 4, leading to a surge drum 5B.

As is usual in refrigeration equipment the surge drum 5B and the evacuating drum 5A are interconnected by two pipes, the one 5C comprising a pump 5D and the other 5E comprising a valve 5F. The components 2, 3, 4 and 5A-5F form together the refrigeration unit.

A liquid ice mix to be frozen is supplied from a pump 7, controlled by electronic control means 17, through a mix feed conduit 6 to the freezer 1. A mass flow meter 25 for the ice mix is arranged in this conduit 6. Air or another gas for aerating the frozen product is supplied from a suitable source 23 of pressurized gas, such as a compressor P, through a supply line 10, comprising suitable control means 11, such as a valve, and a mass flow meter 24, both connected to the electronic control means 17.

This supply line 10 is opening into either the mix feed conduit 6 as shown or directly into the freezer 1. The freezer is provided with a product discharge conduit 8 comprising a discharge pump 9.

Inside the freezer 1 a suitable rotor with scraper means 12 is rotatably mounted for mixing or whipping the ice mix while freezing. The rotor 12 is drivable by a motor 13 through the intermediate of a suitable gearing 14. This motor is provided with a torque or load transducer 15 giving information representing the motor load.

An evacuating pipe comprising a evacuating valve 16 is connecting the jacket 2 and an evacuation vessel 5A of the refrigeration unit 5.

For suitably preventing freeze-up, the apparatus is provided with a suitable programmable electronic control means 17. This control means is operatively connected to the mix feed pump 7, the product discharge pump 9, the air control means 11, motor means 18 for opening and closing the evacuating valve 16, the refrigeration unit 5 and the torque transducer 15.

The electronic control means 17 is programmed with a usual programme: with gradual increasing torque or motor load the refrigeration is decreased and, reversely, with gradual decreasing torque or motor load the refrigeration is increased, thereby obtaining a product having an almost uniform viscosity.

According to the invention, the electronic control means 17 is also programmed such that the rate of change of the power or motor load is compared with a pre-set value, which is stored in the memory of the electronic control means 17. As soon as this rate of change exceeds the preset value, a control signal is given to energize the motor means 18 to open the evacuating valve 16, whereby the refrigerant is evacuated from the jacket 2 into the refrigerant vessel. It is preferred that simultaneously the refrigerant supply through supply line 3 is stopped by closing a valve 19 in supply line 3. The normal refrigeration control as described hereinbefore may be resumed after a predetermined lapse of time or when noticing that the motor load has dropped below a set point.

Fig. 2 shows a diagram in which motor load K is shown as a function of time t.

Usually the motor load will be fluctuating and ranging about the mean value $\overline{K}$ between $K_{max}$ and $K_{min}$. If K is increasing with time as shown at point 20, the refrigeration will be decreased, whereby the viscosity of the mixture in the freezer will gradually decrease, resulting in a decreasing motor load as shown at point 21 where the process goes the other way round, etc.

If, however, the rate of change of this motor load, that is the motor load derived with time exceeds an empirically predetermined value representing the first symptoms of freeze-up (as indicated at point 22), the refrigeration should be stopped as described hereinbefore.

In the graphic representation of Fig. 2 this warning for a freeze up is given if the slope of the graph exceeds a predetermined angle, which slope is representing the rate of change of the motor load or $\frac{dK}{dt}$.

The refrigeration can be resumed by closing the valve 16 and opening the valve 19 again. This resumption of the refrigeration can be triggered in different manners, such as if the torque value descends again below a preset value, usually $\overline{K}$.

## Claims

1. Apparatus for making frozen confection material, comprising a motor driven scraped surface heat exchanger (1), including refrigeration means(2) surrounding a cylinder, scraping means (12) rotatably arranged in said cylinder driveable by a motor means (13), load sensing means (15) for sensing the torque or power consumption of said motor, an electronic control means (17) provided with a program and adapted to receive input signals from the said sensing means (15) and to give control signals controlling a valve (16) for evacuating a refrigerant from the refrigeration means (2), the program having a comparing step for comparing the rate of change of power measured to a pre-set value and triggering a control signal for said valve (16) if the rate of change exceeds the pre-set value.

2. Apparatus according to claim 1, in which the heat exchanger is provided with an electronically controlled air dosage system comprising a mix pump (7) having a variable drive, an inductive mix flow meter receiving mix from said pump, a source of pressurized air (23), an air mass flow meter and a motor-operated air control valve (11) receiving input signals from the mix flow meter and the airflow meter, wherein the electronic control means (17) is controlling the air control valve (11), the mix pump (7) and the refrigerant evacuating valve (16).

3. Method for making frozen confection material by agitating a liquid ice mix in a scraped surface heat exchanger in which a refrigerant is circulated, monitoring the torque or power consumption for agitating said mix, comparing the rate of change of said torque or power consumption with a pre-set value and evacuating the refrigerant from the heat exchanger if said rate of change exceeds that pre-set value.

*Fig.1.*

5C  5D

P

5E

5B

12  4  2  1  8

13  14

P

6  11

18  3  9

P

10

25  24

16  19

7  P

17  5F

5A

*Fig.2.*

K

K_max  20  22

K̄

K_min  21

t →

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| Y | GB-A-2 181 068 (R.D. HOWELL et al.) * Abstract; page 3, lines 29-54,65-69; page 3, lines 79-122; fig. 1,1B * | 1,2,3 | A 23 G 9/22 G 05 D 17/02 |
| Y | DERWENT FILE SUPPLIER WPI(L), AN 85-122900 (1985), Derwent Publications Ltd, London, GB; & DD-A-217 697 (HUMBOLDT-UNIV) * Abstract * | 1,2,3 | |
| A | FR-A-2 616 043 (J.J. GOAVEC) * Fig. 2; page 12, line 25 - page 14, line 8 * | 1,2 | |
| A | US-A-2 959 932 (P. SPERGEL et al.) * Figures 1,2,15,5; column 10, line 62 - column 11, line 36 * | 1 | |
| A | US-A-3 608 325 (W.L. HOCK et al.) | | |
| A | US-A-4 275 567 (S.W. SCHWITTERS) * Fig. 1; column 7, line 36 - column 8, line 8; column 4, lines 3-65 * | 1,2,3 | TECHNICAL FIELDS SEARCHED (Int. Cl.5) A 23 G |
| A | US-A-3 823 571 (D.C. SMITH et al.) | | |
| A | EP-A-0 073 577 (STOELING) | | |
| A | US-A-3 698 203 (C.R. STOELING) | | |
| A | US-A-3 719 056 (W.L. HOCK et al.) | | |

The present search report has been drawn up for all claims

| Place of search | Date of completion of the search | Examiner |
|---|---|---|
| THE HAGUE | 08-03-1990 | GUYON R.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)